# EUROPEAN PATENT APPLICATION

(11) **EP 3 392 937 A1**
(43) Date of publication of application: **24.10.2018**
(21) Application number: 18168210.5
(22) Date of filing: 19.04.2018
(51) Int. Cl.: H01M 4/58, H01M 4/36, H01M 4/62, H01M 10/0525

(54) **METHOD FOR MODIFYING LITHIUM IRON PHOSPHATE CATHODE MATERIAL, CATHODE PLATE, AND LITHIUM IRON PHOSPHATE BATTERY**

(30) Priority: 20.04.2017 CN 201710262712
(71) Applicant: Optimum Battery Co., Ltd., Shenzhen City, Guangdong 518118 (CN)
(72) Inventor: TANG, Chao, Shenzhen, Guangdong 518118 (CN); RONG, Liang bin, Shenzhen, Guangdong 518118 (CN); DENG, Chang yuan, Shenzhen, Guangdong 518118 (CN); RAO, Mu min, Shenzhen, Guangdong 518118 (CN)
(74) Representative: Greaves Brewster LLP

(57) **Abstract**

The present application provides a method for modifying lithium iron phosphate cathode material, comprising steps of: 1) mixing a binder and a metal-containing modifier at a certain proportion to form a first slurry, wherein the binder is a mixture of ammonium chloride and a phosphate organic binder or a mixture of ammonium chloride and an inorganic binder; 2) mixing the first slurry and lithium iron phosphate powder at a certain proportion to form a second slurry; 3) heating the second slurry at 300-400°C for 4-8 hours to form a solidified slurry; 4) heating the solidified slurry at 600-700°C for 36-48 hours to obtain a modified lithium iron phosphate cathode material. The present application also provides a cathode plate and a lithium ion battery including the same.

## Description

### BACKGROUND OF THE INVENTION

### Field of the Invention

The present application generally relates to lithium ion batteries and, more particularly, to a method for modifying lithium iron phosphate cathode material, a cathode plate, and a lithium iron phosphate battery.

### Description of the Related Art

With the shortage of fossil fuels and the worsening of environmental pollution problems, lots of countries in the world are making great efforts to develop clean and sustainable energy. After several years of rapid development, lithium ion batteries have been widely used in various fields of human life, especially in the field of electric vehicles.

Lithium iron phosphate is considered as an ideal cathode material for lithium ion batteries and has advantages of safe, long cycle life, good high temperature performance, abundant sources of raw materials, and environmental friendliness. However, lithium ion batteries using lithium iron phosphate as cathode material has poor rate performance, especially in high current charging process, which has become the main cause that restrict the development of lithium iron phosphate batteries.

In view of the foregoing, what is needed, therefore, is to provide a method for modifying lithium iron phosphate cathode material, a cathode plate, and a lithium iron phosphate battery to overcome the defects as mentioned above.

### SUMMARY OF THE INVENTION

One object of the present application is to provide a method for modifying lithium iron phosphate cathode material, which could effectively prepare a modified lithium iron phosphate cathode material with good rate performance.

According to one embodiment of the present application, a method for modifying lithium iron phosphate cathode material comprising steps of:
1) mixing a binder and a metal-containing modifier at a certain proportion to form a first slurry, wherein the binder is a mixture of ammonium chloride and a phosphate organic binder or a mixture of ammonium chloride and an inorganic binder;
2) mixing the first slurry and lithium iron phosphate powder at a certain proportion to form a second slurry;
3) heating the second slurry at 300-400°C for 4-8 hours to form a solidified slurry;
4) heating the solidified slurry at 600-700°C for 36-48 hours to obtain a modified lithium iron phosphate cathode material.

According to one aspect of the present application, the metal-containing modifier includes a major component and a minor component, and the major component is selected from a group consisting of aluminum, aluminum phosphate, alumina, and combinations thereof.

According to one aspect of the present application, the minor component is selected from a group consisting of zinc, zinc oxide, zinc phosphate, magnesium phosphate, magnesia, and combinations thereof.

According to one aspect of the present application, the binder accounts for 60-70% of the total weight of the first slurry, the major component accounts for 28-40% of the total weight of the first slurry, and the minor component account for 2-10% of the total weight of the first slurry.

According to one aspect of the present application, in step 2), the first slurry and the lithium iron phosphate powder are mixed at a mass ratio of 1:(2-4).

According to one aspect of the present application, in step 4), heating the solidified slurry is carried out under the protection of nitrogen.

According to one aspect of the present application, in step 2), the first slurry and the lithium iron phosphate powder are mixed by ultrasonic treatment.

The method for modifying lithium iron phosphate cathode material provided according to the present application improves the adhesion between the lithium iron phosphate powder and the metal-containing modifier through the mixture of ammonium chloride and a phosphate organic binder or the mixture of ammonium chloride and an inorganic binder, and forms the solidified slurry after a high-temperature heat treatment, and then performs thermal diffusion modification to obtain a modified lithium iron phosphate cathode material which coated with a uniform aluminized layer, thereby improving the electrical conductivity, reducing the impedance between particles, and improving capacity and rate performance of the material.

One embodiment of the present application provides a cathode plate comprising a cathode current collector and a cathode slurry coated on two opposite surfaces of the cathode current collector; the cathode slurry comprising a conductive agent, a binding agent, a solvent and the modified lithium iron phosphate cathode material prepared according to the present application.

One embodiment of the present application provides a lithium iron phosphate battery comprising a shell having an opening at one end, a winding core positioned in the shell, electrolyte received in the shell and immersing the winding core, and a cap cover positioned in the opening for enclosing the opening; wherein the winding core comprising the cathode plate provided according to the present application, an anode plate and a separator settled between the cathode plate and the anode plate.

Compared with the prior art, the lithium iron phosphate battery provided according to the present application may have better rate performance, especially in the high current charging process.

### BRIEF DESCRIPTION OF THE DRAWINGS

FIG. 1 depicts a flow chart of a method for modifying lithium iron phosphate cathode material provided according to the present application;
FIG. 2 depicts a schematic view of a cathode plate provided according to the present application;
FIG. 3 depicts a schematic view of a lithium iron phosphate battery provided according to the present application;
FIG. 4 depicts a SEM image of a modified lithium iron phosphate cathode material prepared according to Example 1 of the present application;
FIG. 5 depicts charge and discharge diagrams of lithium iron phosphate batteries provided according to Example 1 of the present application; and
FIG. 6 depicts cycle diagrams of lithium iron phosphate batteries provided according to Example 1 of the present application.

### DETAILED DESCRIPTION OF THE PREFERRED EMBODIMENTS

In order that the objects, technical solution and technical effects of the present application could be understood more clearly, the present application will be described in more detail with reference to the accompanying drawings and examples. It should be understood that the specific examples described herein are illustrative only and are not intended to limit the present application.

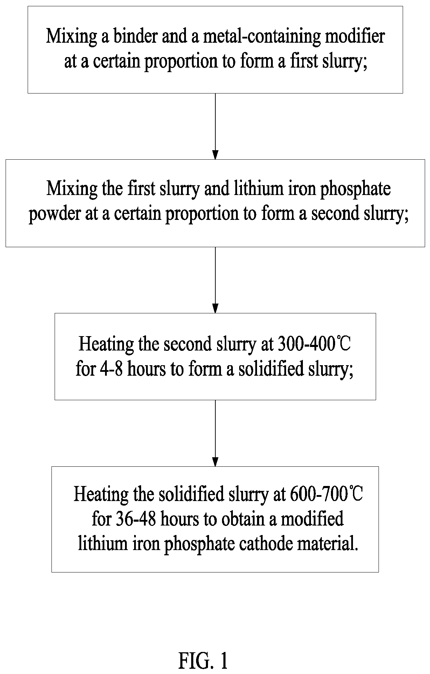

Referring to FIG. 1, one embodiment of the present application provides a method for modifying lithium iron phosphate cathode material comprising steps of:
1) mixing a binder and a metal-containing modifier at a certain proportion to form a first slurry, wherein the binder is a mixture of ammonium chloride and a phosphate organic binder or a mixture of ammonium chloride and an inorganic binder;
2) mixing the first slurry and lithium iron phosphate powder at a certain proportion to form a second slurry;
3) heating the second slurry at 300-400°C for 4-8 hours to form a solidified slurry;
4) heating the solidified slurry at 600-700°C for 36-48 hours to obtain a modified lithium iron phosphate cathode material.

Specifically, the metal-containing modifier includes a major component and a minor component, and the major component is selected from a group consisting of aluminum, aluminum phosphate, alumina, and combinations thereof.

Specifically, the minor component is selected from a group consisting of zinc, zinc oxide, zinc phosphate, magnesium phosphate, magnesia, and combinations thereof.

Specifically, in step 1), the binder accounts for 60-70% of the total weight of the first slurry, the major component accounts for 28-40% of the total weight of the first slurry, and the minor component account for 2-10% of the total weight of the first slurry.

Specifically, in step 2), the first slurry and the lithium iron phosphate powder are mixed at a mass ratio of 1:(2-4).

Specifically, in step 4), heating the solidified slurry is carried out under the protection of nitrogen.

Specifically, in step 2), the first slurry and the lithium iron phosphate powder are mixed by ultrasonic treatment.

The method for modifying lithium iron phosphate cathode material provided according to the present application improves the adhesion between the lithium iron phosphate powder and the metal-containing modifier through the mixture of ammonium chloride and a phosphate organic binder or the mixture of ammonium chloride and an inorganic binder, and forms the solidified slurry after a high-temperature heat treatment, and then performs thermal diffusion modification to obtain a modified lithium iron phosphate cathode material which coated with a uniform aluminized layer, thereby improving the electrical conductivity, reducing the impedance between particles, and improving capacity and rate performance of the material.

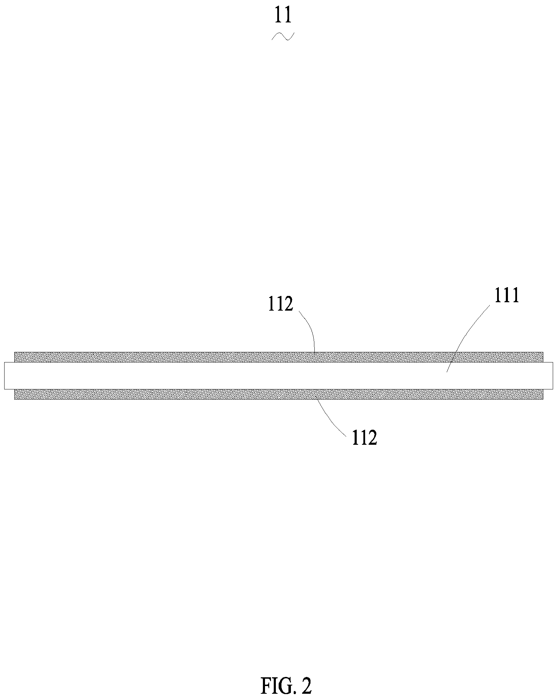

Referring to FIG. 2, one embodiment of the present application provides a cathode plate 11 comprising a cathode current collector 111 and a cathode slurry 112 coated on two opposite surfaces of the cathode current collector 111; the cathode slurry 112 comprising a conductive agent, a binding agent, a solvent and the modified lithium iron phosphate cathode material prepared according to the method for modifying lithium iron phosphate cathode material of the present application.

Specifically, the cathode current collector 111 is an aluminum foil.

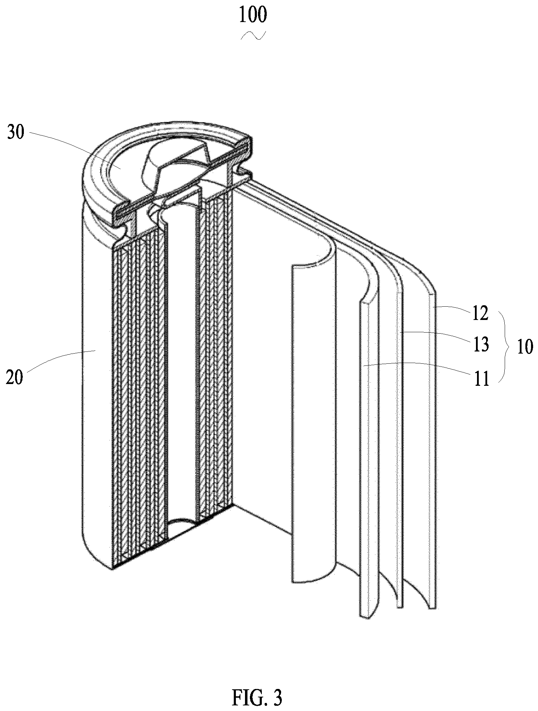

Referring to FIG. 3, one embodiment of the present application provides a lithium iron phosphate battery 100 comprising a shell 20 having an opening at one end, a winding core 10 positioned in the shell 20, electrolyte received in the shell 20 and immersing the winding core 10, and a cap cover 30 positioned in the opening for enclosing the opening; wherein the winding core 10 comprising the cathode plate 11 provided according to the method for modifying lithium iron phosphate cathode material of the present application, an anode plate 12 and a separator 13 settled between the cathode plate 11 and the anode plate 12.

### Example 1:

1. mixing a binder consisting of ammonium and aluminum dihydrogen phosphate and a metal-containing modifier consisting of aluminum and zinc dihydrogen phosphate and aluminum at a certain proportion to from a first slurry, wherein the binder accounts for 60% of the total weight of the first slurry, the aluminum accounts for 35% of the total weight of the first slurry, and the zinc dihydrogen phosphate accounts for 5% of the total weight of the first slurry;
2. mixing the first slurry and lithium iron phosphate powder at a mass ratio of 1:2 and treating with ultrasonic to form a second slurry;
3. heating the second slurry at 300°C under the protection of nitrogen for 4 hours to form a solidified slurry;
4. heating the solidified slurry at 600°C for 36 hours to obtain a modified lithium iron phosphate cathode material;
5. mixing the modified lithium iron phosphate cathode material, a conductive agent, a binding agent and a solvent at a certain proportion to obtain a cathode slurry, and coating the cathode slurry on two opposite surfaces of an aluminum foil to obtain a cathode plate 11;
6. winding the cathode plate 11, an anode plate 12 and separators 13 into a winding core 10 and sealing the winding core 10 into a shell 20 after injecting electrolyte to obtain a lithium iron phosphate battery 100.

### Example 2:

The lithium iron battery 100 of Example 2 is almost the same as that of Example 1, the difference lies in that the metal-containing modifier is consisting of aluminum dihydrogen phosphate and zinc, and the aluminum dihydrogen phosphate accounts for 35% of the total weight of the first slurry and the zinc accounts for 5% of the total weight of the first slurry.

### Example 3:

The lithium iron battery 100 of Example 3 is almost the same as that of Example 1, the difference lies in that the metal-containing modifier is consisting of alumina and magnesium dihydrogen phosphate, and the alumina accounts for 35% of the total weight of the first slurry and the magnesium dihydrogen phosphate accounts for 5% of the total weight of the first slurry.

### Example 4:

The lithium iron battery 100 of Example 4 is almost the same as that of Example 1, the difference lies in that the second slurry is heated at 400°C for 8 hours.

### Example 5:

The lithium iron battery 100 of Example 5 is almost the same as that of Example 1, the difference lies in that the solidified slurry is heated at 700°C for 48 hours.

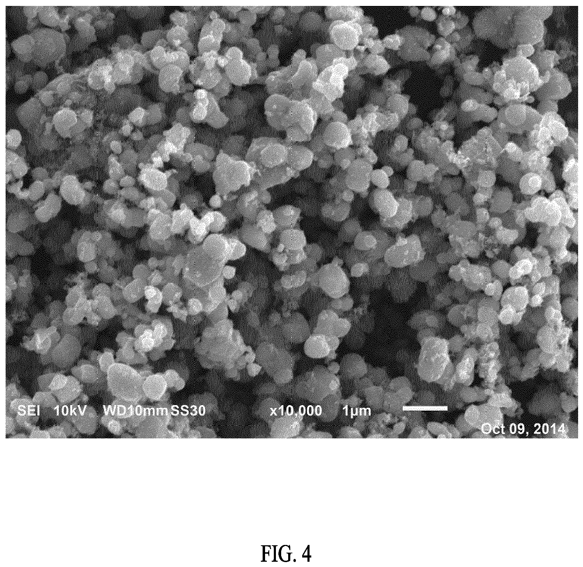

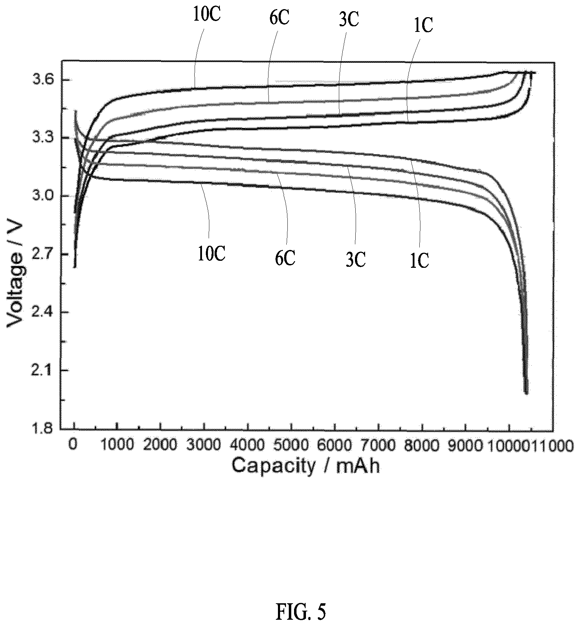

The SEM image of the modified lithium iron phosphate cathode material prepared according to Example 1 is shown in FIG. 4. Referring to FIG. 5, charge and discharge diagrams at different rates of lithium iron phosphate batteries provided according to Example 1 are measured, and results of charging constant current ratios at 1C, 3C, 6C and 10C are shown in Table 1.

**Table 1 charging constant current ratios of lithium iron phosphate batteries provided according to Example 1**

| Charge and discharge rate | 1C | 3C | 6C | 10C |
|---|---|---|---|---|
| Charging constant current ratio / % | 98.92 | 97.03 | 95.53 | 91.61 |

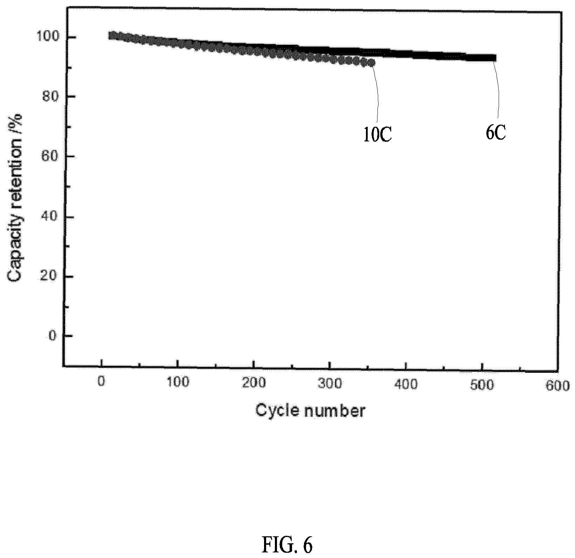

In addition, cycle performances at 6C and 10C of lithium iron phosphate batteries provided according to Example 1 are measured. As shown in FIG. 6, capacity retention after 510 charge and discharge cycles at 6C is maintained at 94% or more and the capacity retention after 350 charge and discharge cycles at 10C is maintained at 90% or more.

It could be concluded that lithium iron phosphate batteries, which using the modified lithium iron phosphate cathode material prepared according to the method for modifying lithium iron phosphate cathode material, have good cycle performance and rate performance.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for modifying lithium iron phosphate cathode material, comprising steps of:
1) mixing a binder and a metal-containing modifier at a certain proportion to form a first slurry, wherein the binder is a mixture of ammonium chloride and a phosphate organic binder or a mixture of ammonium chloride and an inorganic binder;
2) mixing the first slurry and lithium iron phosphate powder at a certain proportion to form a second slurry;
3) heating the second slurry at 300-400°C for 4-8 hours to form a solidified slurry;
4) heating the solidified slurry at 600-700°C for 36-48 hours to obtain a modified lithium iron phosphate cathode material.

2. The method for modifying lithium iron phosphate cathode material according to claim 1, wherein the metal-containing modifier includes a major component and a minor component, and the major component is selected from a group consisting of aluminum, aluminum phosphate, alumina, and combinations thereof.

3. The method for modifying lithium iron phosphate cathode material according to claim 2, wherein the minor component is selected from a group consisting of zinc, zinc oxide, zinc phosphate, magnesium phosphate, magnesia, and combinations thereof.

4. The method for modifying lithium iron phosphate cathode material according to claim 3, wherein the binder accounts for 60-70% of the total weight of the first slurry, the major component accounts for 28-40% of the total weight of the first slurry, and the minor component account for 2-10% of the total weight of the first slurry.

5. The method for modifying lithium iron phosphate cathode material according to claim 1, wherein the first slurry and the lithium iron phosphate powder are mixed at a mass ratio of 1:(2-4).

6. The method for modifying lithium iron phosphate cathode material according to claim 1, wherein heating the solidified slurry is carried out under the protection of nitrogen.

7. The method for modifying lithium iron phosphate cathode material according to claim 1, wherein the first slurry and the lithium iron phosphate powder are mixed by ultrasonic treatment.

8. A cathode plate (11), comprising a cathode current collector (111) and a cathode slurry (112) coated on two opposite surfaces of the cathode current collector (111); the cathode slurry (112) comprising a conductive agent, a binding agent, a solvent and the modified lithium iron phosphate cathode material prepared according to claim 1.

9. A lithium iron phosphate battery (100), comprising a shell (20) having an opening at one end, a winding core (10) positioned in the shell (20), electrolyte received in the shell (20) and immersing the winding core (10), and a cap cover (30) positioned in the opening for enclosing the opening; wherein the winding core (10) comprising the cathode plate (11) provided according to claim 8, an anode plate (12) and a separator (13) settled between the cathode plate (11) and the anode plate (12).

10. The lithium iron phosphate battery (100) of claim 9, wherein the metal-containing modifier includes a major component and a minor component, and the major component is selected from a group consisting of aluminum, aluminum phosphate, alumina, and combinations thereof.

11. The lithium iron phosphate battery (100) of claim 10, wherein the minor component is selected from a group consisting of zinc, zinc oxide, zinc phosphate, magnesium phosphate, magnesia, and combinations thereof.

12. The lithium iron phosphate battery (100) of claim 11, wherein the binder accounts for 60-70% of the total weight of the first slurry, the major component accounts for 28-40% of the total weight of the first slurry, and the minor component account for 2-10% of the total weight of the first slurry.

13. The lithium iron phosphate battery (100) of claim 9, wherein the first slurry and the lithium iron phosphate powder are mixed at a mass ratio of 1:(2-4).
